# EUROPEAN PATENT APPLICATION

(11) **EP 4 597 643 A1**
(43) Date of publication of application: **06.08.2025**
(21) Application number: 22968856.9
(22) Date of filing: 20.12.2022
(51) Int. Cl.: H01M 4/78

(54) **SECONDARY BATTERY, BATTERY MODULE, BATTERY PACK AND ELECTRIC DEVICE**

(71) Applicant: Contemporary Amperex Technology (Hong Kong) Limited, Central (HK)
(72) Inventor: QIN, Meng, NINGDE, Fujian 352100 (CN); GUAN, Yingjie, NINGDE, Fujian 352100 (CN); ZHAO, Yuzhen, NINGDE, Fujian 352100 (CN); YANG, Huiling, NINGDE, Fujian 352100 (CN); WEN, Yan, NINGDE, Fujian 352100 (CN); HUANG, Qisen, NINGDE, Fujian 352100 (CN)
(74) Representative: Frick, Robert
(86) International application number: PCT/CN2022/140447
(87) International publication number: WO 2024/130554

(57) **Abstract**

This application provides a secondary battery, a battery module, a battery pack, and an electrical device. The secondary battery includes a positive electrode plate and an electrolyte solution. The electrolyte solution contains a film-forming additive. A film resistance x Ω of the positive electrode plate and a mass percent y% of the film-forming additive based on a total mass of the electrolyte solution satisfy: x × y ≤ 25. The film resistance and the film-forming additive of the secondary battery provided in this application satisfy the above relationship. The Coulombic efficiency, high-temperature cycle performance, and high-temperature storage performance of the battery can be enhanced by regulating the film resistance and the film-forming additive of the secondary battery.

## Description

### TECHNICAL FIELD

This application relates to the technical field of secondary batteries, and in particular, to a secondary battery, a battery module, a battery pack, and an electrical device.

### BACKGROUND

In recent years, secondary batteries have been widely applied in energy storage power systems such as hydro, thermal, wind, and solar power stations, and in many other fields such as electric tools, electric bicycles, electric motorcycles, and electric vehicles, military equipment, and aerospace. The universal application of the secondary batteries gives rise to higher requirements on the energy density, cycle performance, and the like of the batteries.

A secondary battery usually includes a positive electrode plate, a negative electrode plate, and an electrolyte solution. Metal ions are shuttled between the positive electrode and the negative electrode to implement charging and discharging. Therefore, the performance of the secondary battery is not decided by a single factor, but depends on whether constituents and parameters of different components of the battery can work together synergistically.

### SUMMARY

This application is made in view of the above subject matter. An objective of this application is to provide a secondary battery, so as to improve electrochemical performance, especially high-temperature performance, of the secondary battery by setting parameters of different components of the secondary battery synergistically.

A first aspect of this application provides a secondary battery. The secondary battery includes a positive electrode plate and an electrolyte solution. The electrolyte solution contains a film-forming additive. A film resistance x Ω of the positive electrode plate and a mass percent y% of the film-forming additive based on a total mass of the electrolyte solution satisfy: x × y ≤ 25.

The applicant hereof unexpectedly discovers a synergistic effect between the film resistance of the positive electrode plate of the battery and the content of the film-forming additive. The dosage of the film-forming additive may be adjusted based on the value of the film resistance of the positive electrode plate of the secondary battery, so as to ensure improvement of overall performance of the battery, including Coulombic efficiency, cycle performance, and safety performance of the battery. By controlling the film resistance x Ω of the positive electrode plate of the battery and the mass percent y% of the film-forming additive based on the total mass of the electrolyte solution to fall within the range of x × y ≤ 25, this application can reduce the capacity loss of the battery in the initial charge-and-discharge cycle, improve the Coulombic efficiency, high-temperature cycle performance, and high-temperature storage performance of the battery effectively, suppress the generation of dendrites in the battery, and enhance the safety performance and electrochemical performance of the battery comprehensively.

In any embodiment, based on the total mass of the electrolyte solution, the mass percent of the film-forming additive in the electrolyte solution is 0.2% to 5%, and optionally 0.5% to 2%.

The battery falling within the above range of mass percent is excellent in Coulombic efficiency, high-temperature performance, and capabilities of suppressing sodium dendrites.

In any embodiment, the film resistance of the positive electrode plate is not greater than 50 Ω, and optionally not greater than 10 Ω.

The battery with the film resistance of the positive electrode plate being not greater than 50 Ω is excellent in Coulombic efficiency, high-temperature performance, and capabilities of suppressing sodium dendrites.

In any embodiment, the film-forming additive includes one or more of a sulfate ester compound, a sulfonate ester compound, or a sulfite ester compound.

The sulfate ester compound, the sulfite ester compound, and the sulfonate ester compound are reduced with precedence over the electrolyte salt and the solvent, and form a dense, homogeneous, and thin solid electrolyte interface (SEI) film on the surface of the negative electrode, thereby reducing direct contact between the negative electrode and the electrolyte solution. In addition, the salts generated in the SEI film by the sulfate ester compound, the sulfite ester compound, and the sulfonate ester compound are resistant to high temperatures, thereby effectively enhancing the electrochemical performance of the battery at high temperatures. The additives such as the sulfate ester compound, sulfite ester compound, and sulfonate ester compound can enhance the Coulombic efficiency, high-temperature cycle performance, and high-temperature storage performance of the battery, and suppress the generation of dendrites.

In any embodiment, the sulfate ester compound includes one or more of compounds represented by Formula I:

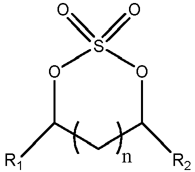

In the formula above, n is any integer ranging from 0 to 3, and R₁ and R₂ each are independently selected from hydrogen, fluorine, cyano, olefinyl, substituted or unsubstituted C₁ to C₆ alkyl, or

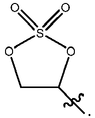

In any embodiment, the sulfate ester compound includes one or more of ethylene sulfate, 4-methyl-ethylene sulfate, 4-fluoroethylene sulfate, 4-n-propylethylene sulfate, 4,4'-bis(ethylene sulfate), 4-vinyl- ethylene sulfate, 4-ethyl ethylene sulfate, 4,5-difluoroethylene sulfate, or 4-cyanoethylene sulfate.

In any embodiment, the sulfonate ester compound includes one or more of a salt with a sulfonate anion or a compound represented by Formula II or Formula III:

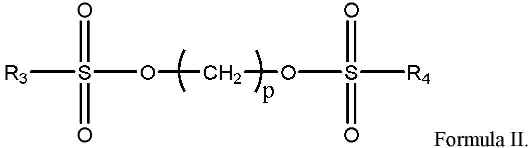

In the formula above, p is any integer ranging from 0 to 5, and R₃ and R₄ each are independently selected from substituted or unsubstituted C₁ to C₆ alkyl.

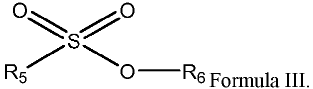

In the formula above, R₅ and R₆ as well as sulfur and oxygen linked thereto jointly form a 4-, 5- or 6-membered ring, the ring optionally contains a double bond and optionally contains one or two sulfonate groups, and hydrogen on the ring is optionally substituted by halogen or C₁ to C₃ alkyl.

In any embodiment, the sulfonate ester compound includes one or more of 1,3-propane sultone, 3-fluoro-1,3-propane sultone, 1-methyl-1,3-propane sultone, 1,4-butane sultone, 1,4-butene sultone, 1,3-propene sultone, methylene methane disulfonate, pyridinium propane sulfonate, or 1,4-butanediol dimethyl sulfonate.

In any embodiment, the sulfite ester additive includes one or more of compounds represented by Formula IV:

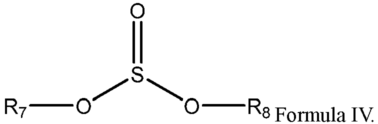

In the formula above, R₇ and R₈ each are independently selected from substituted or unsubstituted C₁ to C₆ alkyl; or, R₇ and R₈, oxygen linked thereto, and sulfur linked to the oxygen jointly form a 5- or 6-membered ring; the ring optionally contains a double bond; and hydrogen on the ring is optionally substituted by halogen or C₁ to C₃ alkyl.

In any embodiment, the sulfite ester includes one or more of 1,3-propylene sulfite, ethylene sulfite, butylene sulfite, dimethyl sulfite, or diethyl sulfite.

In any embodiment, the electrolyte solution further includes a sodium salt and an ether solvent. A molar concentration of the sodium salt is 0.5 mol/L to 4 mol/L, and optionally 0.8 mol/L to 2 mol/L.

Controlling the molar concentration of the sodium salt to fall within the appropriate range can improve the Coulombic efficiency, high-temperature cycle performance, and high-temperature storage performance of the battery.

The molecules of the ether solvent can build a stable electrode/electrolyte interface on the surface of the negative electrode, form a stable SEI film, alleviate electrochemical polarization, and enhance the Coulombic efficiency, high-temperature cycle performance, and high-temperature storage performance of the battery.

In any embodiment, the sodium salt includes one or more of sodium hexafluorophosphate, sodium difluoro(oxalato)borate, sodium tetrafluoroborate, sodium bis(oxalato)borate, sodium perchlorate, sodium hexafluoroarsenate, sodium bis(fluorosulfonyl)imide, sodium trifluoromethanesulfonate, or sodium bis(trifluoromethanesulfonyl)imide.

In any embodiment, the ether solvent includes one or more of ethylene glycol dimethyl ether, ethylene glycol diethyl ether, diglyme, triglyme, tetraglyme, 1,3-dioxolane, tetrahydrofuran, methyltetrahydrofuran, diphenyl ether, crown ether, or fluoroether.

The molecules of the ether solvent in the ether electrolyte solution can build a stable electrode/electrolyte interface on the surface of the negative electrode such as a sodium metal negative electrode (including the circumstance of an anode-free battery), carbon material negative electrode, or another non-carbon negative electrode, form a stable solid electrolyte interface (SEI) film, alleviate electrochemical polarization, and enhance the Coulombic efficiency, high-temperature cycle performance, and high-temperature storage performance of the battery.

In any embodiment, the positive electrode plate includes a positive active material. The positive active material includes one or more of a layered transition metal oxide, a polyanionic compound, or a Prussian blue analogue.

In any embodiment, the secondary battery is one of a lithium-ion battery or a sodium-ion battery.

In any embodiment, the secondary battery is an anode-free sodium metal battery.

A second aspect of this application provides a battery module. The battery module includes the secondary battery according to the first aspect.

A third aspect of this application provides a battery pack. The battery pack includes the secondary battery according to the first aspect or the battery module according to the second aspect.

A fourth aspect of this application provides an electrical device. The electrical device includes at least one of the secondary battery according to the first aspect, the battery module according to the second aspect, or the battery pack according to the third aspect.

### BRIEF DESCRIPTION OF DRAWINGS

FIG. 1 is a schematic diagram of a secondary battery according to an embodiment of this application;
FIG. 2 is an exploded view of the secondary battery shown in FIG. 1 according to an embodiment of this application;
FIG. 3 is a schematic diagram of a battery module according to an embodiment of this application;
FIG. 4 is a schematic diagram of a battery pack according to an embodiment of this application;
FIG. 5 is an exploded view of the battery pack shown in FIG. 4 according to an embodiment of this application; and
FIG. 6 is a schematic diagram of an electrical device that uses a secondary battery as a power supply according to an embodiment of this application.

List of reference numerals:
1. battery pack; 2. upper box; 3. lower box; 4. battery module; 5. secondary battery; 51. housing; 52. electrode assembly; 53. cover plate.

### DETAILED DESCRIPTION OF EMBODIMENTS

The following describes and discloses in detail embodiments of a secondary battery, a battery module, a battery pack, and an electrical device according to this application with due reference to drawings. However, unnecessary details may be omitted in some cases. For example, a detailed description of a well-known matter or repeated description of an essentially identical structure may be omitted. That is intended to prevent the following descriptions from becoming unnecessarily lengthy, and to facilitate understanding by a person skilled in the art. In addition, the drawings and the following descriptions are intended for a person skilled in the art to thoroughly understand this application, but not intended to limit the subject-matter set forth in the claims.

A "range" disclosed herein is defined in the form of a lower limit and an upper limit. A given range is defined by a lower limit and an upper limit selected. The selected lower and upper limits define the boundaries of a particular range. A range so defined may be inclusive or exclusive of the end values, and a lower limit of one range may be arbitrarily combined with an upper limit of another range to form a range. For example, if a given parameter falls within a range of 60 to 120 and a range of 80 to 110, it is expectable that the parameter may fall within a range of 60 to 110 and a range of 80 to 120 as well. In addition, if lower-limit values 1 and 2 are listed, and if upper-limit values 3, 4, and 5 are listed, the following ranges are all expectable: 1 to 3, 1 to 4, 1 to 5, 2 to 3, 2 to 4, and 2 to 5. Unless otherwise specified herein, a numerical range "a to b" is a brief representation of a combination of any real numbers between a and b inclusive, where both a and b are real numbers. For example, a numerical range "0 to 5" herein means all real numbers recited between 0 and 5 inclusive, and the expression "0 to 5" is just a brief representation of a combination of such numbers. In addition, a statement that a parameter is an integer greater than or equal to 2 is equivalent to a disclosure that the parameter is an integer such as 2, 3, 4, 5, 6, 7, 8, 9, 10, 11, 12, and so on.

Unless otherwise expressly specified herein, any embodiments and optional embodiments hereof may be combined with each other to form a new technical solution.

Unless otherwise expressly specified herein, any technical features and optional technical features hereof may be combined with each other to form a new technical solution.

Unless otherwise expressly specified herein, "include" and "comprise" mentioned herein mean open-ended inclusion, or closed-ended inclusion. For example, the terms "include" and "comprise" may mean inclusion of other items that are not recited, or inclusion of only the items recited.

Unless otherwise expressly specified herein, the term "or" is inclusive. For example, the expression "A or B" means "A alone, B alone, or both A and B". More specifically, all and any of the following conditions satisfy the condition "A or B": A is true (or existent) and B is false (or absent); A is false (or absent) and B is true (or existent); and, both A and B are true (or existent).

### [Secondary battery]

This application provides a secondary battery. The secondary battery includes a positive electrode plate and an electrolyte solution. The electrolyte solution contains a film-forming additive. A film resistance x Ω of the positive electrode plate and a mass percent y% of the film-forming additive based on a total mass of the electrolyte solution satisfy: x × y ≤ 25.

As used herein, the term "film resistance" means the resistance of the positive electrode plate. The film resistance may be measured by any well-known method, including but not limited to a one-point probe method, a four-point probe method, a DC two-point probe method, in which an area of contact between a probe and the positive electrode plate is set to 49π mm². An exemplary method for measuring the film resistance R of a positive electrode plate includes: gripping an upper side and a lower side of the positive electrode plate by using two conductive terminals of a Hioki BT23562 internal resistance tester respectively, and applying a pressure to fix the electrode plate, in which a diameter of the conductive terminals is 14 mm, and the applied pressure is 15 MPa to 27 MPa, so that the film resistance of the positive electrode plate is measured.

As used herein, the term "film-forming additive" means an additive used for forming and improving an SEI film or a CEI film on the negative (or positive) electrode. In an anode-free sodium metal battery, the negative active material is formed *in situ* by deposition through initial desodiumization at the positive electrode, but not provided by the negative electrode. Therefore, the film-forming additive added can substantially improve the Coulombic efficiency of the anode-free sodium metal battery.

As used herein, the term "additive" means a small-amount constituent of the electrolyte solution, and may be a gas, liquid, or solid. Conceptually, the only difference between the additive, main solvent, and electrolyte salt lies in the content thereof in the electrolyte solution. The solvents or salts that are added in relatively small amounts may be collectively referred to as additives.

The applicant hereof unexpectedly discovers a synergistic effect between the film resistance of the positive electrode plate of the battery and the content of the film-forming additive. The dosage of the film-forming additive may be adjusted based on the value of the film resistance of the positive electrode plate of the secondary battery, so as to ensure improvement of overall performance of the battery, including Coulombic efficiency and cycle performance of the battery. By controlling the film resistance x Ω of the positive electrode plate of the battery and the mass percent y% of the film-forming additive based on the total mass of the electrolyte solution to fall within the range of x × y ≤ 25, this application can reduce the capacity loss of the battery in the initial charge-and-discharge cycle, improve the Coulombic efficiency, high-temperature cycle performance, and high-temperature storage performance of the battery effectively, suppress the generation of dendrites in the battery, and enhance the safety performance and electrochemical performance of the battery comprehensively.

In some embodiments, based on the total mass of the electrolyte solution, the mass percent of the film-forming additive in the electrolyte solution is 0.2% to 5%. In some embodiments, based on the total mass of the electrolyte solution, the mass percent of the film-forming additive in the electrolyte solution is optionally 0.2%, 0.5%, 1%, 1.5%, 2%, 2.5%, 3%, 3.5%, 4%, 4.5%, or 5%. An upper limit and a lower limit of the mass percent range of the film-forming additive in the electrolyte solution may be any one of the above values.

Controlling the mass percent of the film-forming additive in the electrolyte solution to fall within an appropriate range can avoid poor stability of the SEI film caused by a deficient mass percent of the film-forming additive, and can avoid an increased viscosity of the electrolyte solution, a decreased ionic conductivity, poor kinetics, an excessively thick SEI film, and a rise in the internal resistance of the battery caused by an excessive mass percent of the film-forming additive. The battery falling within the above range of mass percent is excellent in Coulombic efficiency, high-temperature performance, and capabilities of suppressing sodium dendrites.

In some embodiments, based on the total mass of the electrolyte solution, the mass percent of the film-forming additive in the electrolyte solution is 0.5% to 2%. Controlling the mass percent of the film-forming additive in the electrolyte solution to fall within such a range further improves the Coulombic efficiency, the high-temperature cycle capacity retention rate, and the high-temperature storage capacity retention rate of the battery and further reduces the high-temperature cycle resistance.

In some embodiments, the film resistance of the positive electrode plate is not greater than 50 Ω. In some embodiments, the film resistance of the positive electrode plate may be optionally 1 Ω, 2 Ω, 3 Ω, 5 Ω, 10 Ω, 15 Ω, 20 Ω, 25 Ω, 30 Ω, 35 Ω, 40 Ω, 45 Ω, or 50 Ω.

The battery with the film resistance of the positive electrode plate being not greater than 50 Ω is excellent in Coulombic efficiency, high-temperature performance, and capabilities of suppressing sodium dendrites.

In some embodiments, the film resistance of the positive electrode plate is not greater than 10 Ω. Controlling the film resistance of the positive electrode plate to be not greater than 10 Ω further improves the Coulombic efficiency, the high-temperature cycle capacity retention rate, and the high-temperature storage capacity retention rate of the battery and further reduces the high-temperature cycle internal resistance and the high-temperature storage internal resistance.

In some embodiments, the film-forming additive includes one or more of a sulfate ester compound, a sulfonate ester compound, or a sulfite ester compound.

As used herein, the term "sulfate ester compound" means a compound containing a 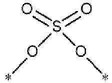 group.

As used herein, the term "sulfonate ester compound" means a compound containing a 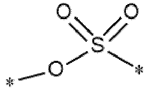 group or a 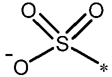 group.

As used herein, the term "sulfite ester compound" means a compound containing a 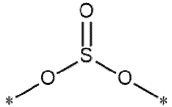 group.

The sulfate ester compound, the sulfite ester compound, and the sulfonate ester compound are reduced with precedence over the electrolyte salt and the solvent, and form a dense, homogeneous, and thin SEI film on the surface of the negative electrode, thereby reducing direct contact between the negative electrode and the electrolyte solution. In addition, the salts generated in the SEI film by the sulfate ester compound, the sulfite ester compound, and the sulfonate ester compound are resistant to high temperatures, thereby effectively enhancing the electrochemical performance of the battery at high temperatures. The additives such as the sulfate ester compound, sulfite ester compound, and sulfonate ester compound can enhance the Coulombic efficiency, high-temperature cycle performance, and high-temperature storage performance of the battery, and suppress the generation of dendrites. Especially for the anode-free sodium metal battery, the additives such as sulfate ester compound, the sulfite ester compound, and the sulfonate ester compound coordinate with the negative current collector synergistically to substantially alleviate the depletion of sodium in the battery by the solvent, and enhance the Coulombic efficiency and high-temperature performance of the battery.

In some embodiments, the sulfate ester compound includes one or more of compounds represented by Formula I:

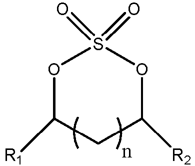

In the formula above, n is any integer ranging from 0 to 3, and R₁ and R₂ each are independently selected from hydrogen, fluorine, cyano, olefinyl, substituted or unsubstituted C₁ to C₆ alkyl, or

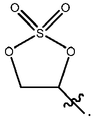

As used herein, the term "cyano" means -CN.

As used herein, the term "olefinyl" means an unsaturated hydrocarbon group containing at least one carbon-carbon double bond.

As used herein, the term "C₁ to C₆ alkyl" means a linear or branched hydrocarbon chain group consisting of only carbon and hydrogen, where the group contains no unsaturated bond, but contains one to six carbon atoms and is attached to the remaining moiety of the molecule through a single bond.

As used herein, the term "substituted" means that at least one hydrogen atom of the compound or chemical moiety is substituted by a substituent of another chemical moiety, where each substituent is independently selected from: hydroxyl, mercapto, amino, cyano, nitro, aldehyde, halogen atom, alkenyl, alkynyl, aryl, heteroaryl, C₁ to C₆ alkyl, or C₁ to C₆ alkoxy.

In some embodiments, n is 0, and therefore, the carbon atom linked to R₁ and the carbon atom linked to R₂ are directly linked by a single bond.

In some embodiments, R₁ and R₂ each are independently selected from hydrogen, fluorine, cyano, methyl, ethyl, n-propyl, isopropyl, n-butyl, isobutyl, sec-butyl, vinyl, propenyl, or

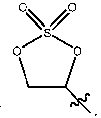

In some embodiments, the sulfate ester compound includes one or more of ethylene sulfate (DTD, 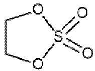 ), 4-methyl-ethylene sulfate (MeDTD, 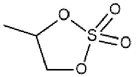 ), 4-fluoroethylene sulfate (FDTD, 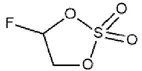 ), 4-n-propylethylene sulfate (PEGLST, 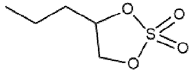 ), 4,4'-bis(ethylene sulfate) (BiDTD, 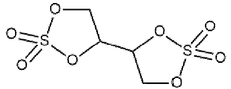 ), 4-vinyl- ethylene sulfate (VDTD, 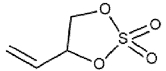 ), 4-ethyl ethylene sulfate (EtDTD, 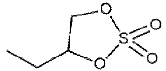 ), 4,5-difluoroethylene sulfate (DFDTD, 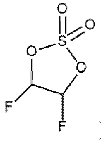 ), or 4-cyanoethylene sulfate (CDTD, 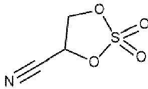 ).

The sulfate ester compound is excellent in forming a film in the secondary battery, and can effectively improve the Coulombic efficiency, high-temperature cycle performance, and high-temperature storage performance of the battery effectively, suppress the generation of dendrites in the battery, and enhance the safety performance and electrochemical performance of the battery comprehensively.

In some embodiments, the sulfate ester compound is one or more selected from ethylene sulfate, 4-methyl-ethylene sulfate, 4-fluoroethylene sulfate, 4-ethylene cyanosulfate, or 4-vinyl-ethylene sulfate. In some embodiments, the sulfate ester compound is selected from ethylene sulfate, 4-methyl-ethylene sulfate, or 4-fluoroethylene sulfate.

The sulfate ester compound is particularly applicable to anode-free batteries, and can substantially improve the Coulombic efficiency, high-temperature cycle performance, and high-temperature storage performance of the anode-free batteries.

In some embodiments, the sulfonate ester compound includes one or more of a salt with a sulfonate anion or a compound represented by Formula II or Formula III:

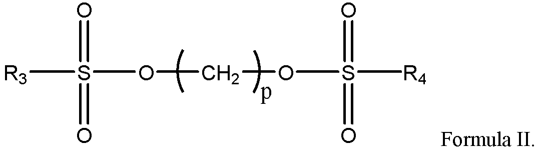

In the formula above, p is any integer ranging from 0 to 5, and R₃ and R₄ each are independently selected from substituted or unsubstituted C₁ to C₆ alkyl,

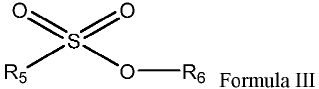

In the formula above, R₅ and R₆ as well as sulfur and oxygen linked thereto jointly form a 4-, 5- or 6-membered ring, the ring optionally contains a double bond and optionally contains one or two sulfonate groups, and hydrogen on the ring is optionally substituted by halogen or C₁ to C₃ alkyl.

As used herein, the term "C₁ to C₃ alkyl" may be understood by reference to the definition of the term "C₁ to C₆ alkyl".

As used herein, the term "halogen" may represent F, Cl, Br, and I.

In some embodiments, p is selected from 1, 2, or 3.

In some embodiments, R₃ and R₄ each are independently selected from hydrogen, fluorine, cyano, methyl, ethyl, n-propyl, isopropyl, n-butyl, isobutyl, sec-butyl, vinyl, or propenyl.

In some embodiments, the sulfonate ester compound includes one or more of 1,3-propane sultone (1,3-PS, 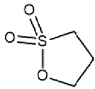 ), 3-fluoro-1,3-propane sultone (FPS, 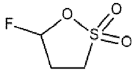 ), 1-methyl-1,3-propane sultone (2,4-BS, 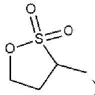 ), 1,4-butane sultone (BS, 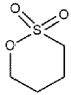 ), 1,4-butene sultone (BST, 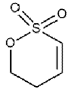 ), 1,3-propene sultone (PES, 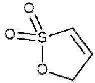 ), methylene methane disulfonate (MMDS, 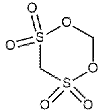 ), pyridinium propane sulfonate (PPS, 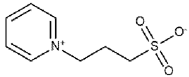 ), or 1,4-butanediol dimethyl sulfonate (BDDMS,

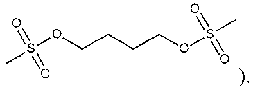

The sulfonate ester compound is excellent in forming a film in the secondary battery, and can effectively improve the Coulombic efficiency, high-temperature cycle performance, and high-temperature storage performance of the battery effectively, suppress the generation of dendrites in the battery, and enhance the safety performance and electrochemical performance of the battery comprehensively.

In some embodiments, the sulfonate ester compound is one or more selected from 3-fluoro-1,3-propane sultone, 1-methyl-1,3-propane sultone, 1,3-propene sultone, methylene methane disulfonate, pyridinium propane sulfonate, or 1,3-propane sultone. In some embodiments, the sulfonate ester compound is one or more selected from 1,3-propane sultone, 3-fluoro-1,3-propane sultone, or 1,3-propene sultone.

The sulfonate ester compound is particularly applicable to anode-free batteries, and can substantially improve the Coulombic efficiency, high-temperature cycle performance, and high-temperature storage performance of the anode-free batteries.

In some embodiments, the sulfite ester compound includes one or more of compounds represented by Formula IV:

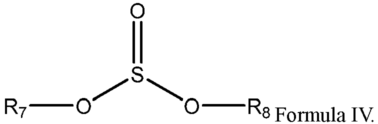

In the formula above, R₇ and R₈ each are independently selected from substituted or unsubstituted C₁ to C₆ alkyl; or, R₇ and R₈, oxygen linked thereto, and sulfur linked to the oxygen jointly form a 5- or 6-membered ring. The ring optionally contains a double bond. Hydrogen on the ring is optionally substituted by halogen or C₁ to C₃ alkyl.

In some embodiments, the sulfite ester includes one or more of 1,3-propylene sulfite 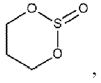 ethylene sulfite (ES, 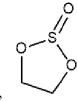 ), butylene sulfite (PS, 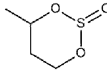 ), dimethyl sulfite (DMS, 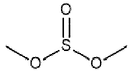 ), or diethyl sulfite (DES,

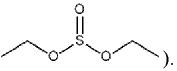

The sulfite ester compound is excellent in forming a film in the secondary battery, and can effectively improve the Coulombic efficiency, high-temperature cycle performance, and high-temperature storage performance of the battery effectively, suppress the generation of dendrites in the battery, and enhance the safety performance and electrochemical performance of the battery comprehensively.

In some embodiments, the electrolyte solution further includes a sodium salt and an ether solvent. A molar concentration of the sodium salt is 0.5 mol/L to 4 mol/L, and optionally 0.8 mol/L to 2 mol/L.

As used herein, the term "ether solvent" means an organic solvent containing an ether bond.

In some embodiments, the molar concentration of the sodium salt is 0.5 mol/L, 1 mol/L, 1.5 mol/L, 2 mol/L, 2.5 mol/L, 3 mol/L, 3.5 mol/L, or 4 mol/L.

Controlling the molar concentration of the sodium salt to fall within the appropriate range can improve the Coulombic efficiency, high-temperature cycle performance, and high-temperature storage performance of the battery.

The molecules of the ether solvent can build a stable electrode/electrolyte interface on the surface of the negative electrode, form a stable solid electrolyte interface (SEI) film, alleviate electrochemical polarization, and enhance the Coulombic efficiency, high-temperature cycle performance, and high-temperature storage performance of the battery.

Using an anode-free sodium metal battery as an example, the ether solvent is highly compatible with a sodium metal negative electrode, and can effectively passivate the sodium metal, form a thin, uniform and dense SEI film on the surface of sodium metal, further prevent the formation of sodium dendrites, and prevent the SEI film from thickening caused by growth and evolution of the sodium dendrites and from affecting ion conduction.

In some embodiments, the sodium salt includes one or more of sodium hexafluorophosphate (NaPF₆), sodium difluoro(oxalato)borate (NaDFOB), sodium tetrafluoroborate (NaBF₄), sodium bis(oxalato)borate (NaBOB), sodium perchlorate (NaClO₄), sodium hexafluoroarsenate (NaAsF₆), sodium bis(fluorosulfonyl)imide (NaFSI), sodium trifluoromethanesulfonate (NaOTf), or sodium bis(trifluoromethanesulfonyl)imide (NaTFSI).

In some embodiments, the ether solvent includes one or more of ethylene glycol dimethyl ether (DME), ethylene glycol diethyl ether (DEE), diglyme (DEGDME), triglyme (TRGDME), tetraglyme (TEGDME), 1,3-dioxolane (DOL), tetrahydrofuran (THF), methyltetrahydrofuran (MeTHF), diphenyl ether, crown ether, or fluoroether.

The fluoroether means an ether solvent containing fluorine. In some embodiments, the fluoroether includes one or more of 1,1,2,2-tetrafluoroethyl-2,2,2-trifluoroethyl ether, 1,1,2,2-tetrafluoroethyl-2,2,3,3-tetrafluoropropyl ether, bis(2,2,2-trifluoroethyl)ether, methoxynonafluorobutane, or ethoxynonafluorobutane.

In some embodiments, the ether solvent includes one or more of ethylene glycol dimethyl ether, ethylene glycol diethyl ether, diglyme, 1,3-dioxolane, or tetrahydrofuran.

In some embodiments, the electrolyte solution includes a solvent other than the ether solvent. Non-restrictive examples of other solvents include at least one selected from vinylene carbonate, ethylene carbonate, propylene carbonate, ethyl methyl carbonate, diethyl carbonate, dimethyl carbonate, dipropyl carbonate, methyl propyl carbonate, ethylene propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone, or diethyl sulfone.

In some embodiments, the electrolyte solution may optionally include another additive capable of improving specified performance indicators of the battery, for example, an additive for improving overcharge performance of the battery, or an additive for improving thermal stability of the electrolyte solution.

In some embodiments, the positive electrode plate includes a positive active material. The positive active material includes one or more of a layered transition metal oxide, a polyanionic compound, or a Prussian blue analogue.

The transition metal in the layered transition metal oxide may be at least one of Mn, Fe, Ni, Co, Cr, Cu, Ti, Zn, V, Zr, or Ce. Optionally, the layered transition metal oxide is, for example, NaₓMO₂, where M is one or more of Ti, V, Mn, Co, Ni, Fe, Cr, or Cu, and 0 < x ≤ 1.

The polyanionic compound may be a type of compound containing a metal ion, a transition metal ion, and a tetrahedral (YO₄)ⁿ⁻ anion unit. The metal ion is optionally one of a sodium ion, a lithium ion, a potassium ion, or a zinc ion. The transition metal is optionally at least one of Mn, Fe, Ni, Co, Cr, Cu, Ti, Zn, V, Zr, or Ce. Y is optionally at least one of P, S, or Si; and n denotes a valence of (YO₄)ⁿ⁻.

The Prussian blue compound may be a compound containing a sodium ion, a transition metal ion, or a cyano ion (CN⁻). The transition metal may be at least one of Mn, Fe, Ni, Co, Cr, Cu, Ti, Zn, V, Zr, or Ce. For example, the Prussian blue compound is NaₐMe_{b}Me'_{c}(CN)₆, where Me and Me' each are independently at least one of Ni, Cu, Fe, Mn, Co, or Zn, 0 < a ≤ 2, 0 < b < 1, and 0 < c < 1.

In some embodiments, the secondary battery is a lithium-ion battery or a sodium-ion battery.

The lithium-ion battery is a battery that works by shuttling lithium ions between a positive electrode and a negative electrode.

The sodium-ion battery is a battery that works by shuttling sodium ions between a positive electrode and a negative electrode.

In some embodiments, the secondary battery is an anode-free sodium metal battery. The anode-free sodium metal battery uses no negative active material, but uses a negative current collector as a negative electrode. Sodium ions are deposited on the negative electrode in an initial charging process, and then return to the positive electrode during discharge, thereby implementing a charge-and-discharge cycle. By employing a negative current collector but without a negative electrode material, the anode-free battery can effectively overcome the defects of the sodium metal battery and achieve a higher energy density than a metallic sodium negative electrode. However, the anode-free battery usually suffers from low Coulombic efficiency, severe sodium dendrites, and other problems due to the absence of a negative electrode. This application creatively solves this problem and substantially improves the high-temperature performance of the anode-free battery.

In some embodiments, the current collector of the anode-free sodium metal battery includes at least one of metal foil, a metal foam current collector, a metal mesh current collector, a carbon felt current collector, a carbon cloth current collector, a carbon paper current collector, or a composite current collector.

In some embodiments, the metal foil is optionally copper foil, aluminum foil, stainless steel foil, iron foil, zinc foil, or titanium foil; and the metal foam current collector is optionally copper foam, aluminum foam, zinc foam, or the like. The metal mesh current collector is optionally a copper mesh or an aluminum mesh. The composite current collectors include a current collector with an undercoat or a current collector with a polymer base film. The composite current collector may be a "sandwich" structure, with the polymer base film located in the middle, and the metal foil located on both sides. Alternatively, the composite current collector may be a structure with metal foil disposed on one side of the polymer base film. The polymer base film is optionally one of polyamide, polyterephthalate, polyimide, polyethylene, polypropylene, polystyrene, polyvinyl chloride, poly(acrylonitrile-co-butadiene-co-styrene), polybutanediol terephthalate, poly-p-phenylene terephthamide, polyphenylene ether, polyoxymethylene, epoxy resin, phenol-formaldehyde resin, polytetrafluoroethylene, polyvinylidene difluoride, silicone rubber, or polycarbonate.

In some embodiments, the secondary battery may include an outer package. The outer package may be configured to package the electrode assembly and the electrolyte.

In some embodiments, the outer package of the secondary battery may be a hard shell such as a hard plastic shell, an aluminum shell, a steel shell, or the like. Alternatively, the outer package of the secondary battery may be a soft package such as a pouch-type soft package. The soft package may be made of plastic such as polypropylene, polybutylene terephthalate, or polybutylene succinate.

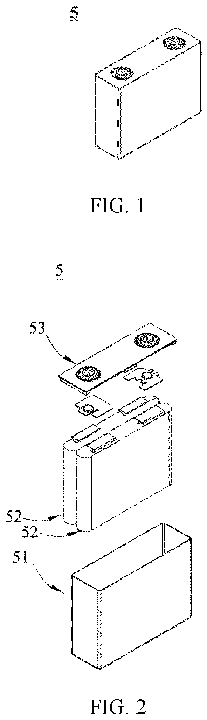

The shape of the secondary battery is not particularly limited in this application, and may be cylindrical, prismatic or any other shape. FIG. 1 shows a prismatic secondary battery 5 as an example.

In some embodiments, referring to FIG. 2, the outer package may include a housing 51 and a cover plate 53. The housing 51 may include a bottom plate and a side plate connected to the bottom plate. The bottom plate and the side plate close in to form an accommodation cavity. An opening that communicates with the accommodation cavity is made on the housing 51. The cover plate 53 can fit and cover the opening to close the accommodation cavity. The positive electrode plate, the negative electrode plate, and the separator may be made into the electrode assembly 52 by winding or stacking. The electrode assembly 52 is packaged in the accommodation cavity. The electrolyte solution infiltrates in the electrode assembly 52. The number of electrode assemblies 52 in a secondary battery 5 may be one or more, and may be selected by a person skilled in the art as actually required.

In some embodiments, the secondary battery may be assembled into a battery module. The battery module may include one or more secondary batteries, and the specific number of secondary batteries in a battery module may be selected by a person skilled in the art depending on practical applications and capacity of the battery module.

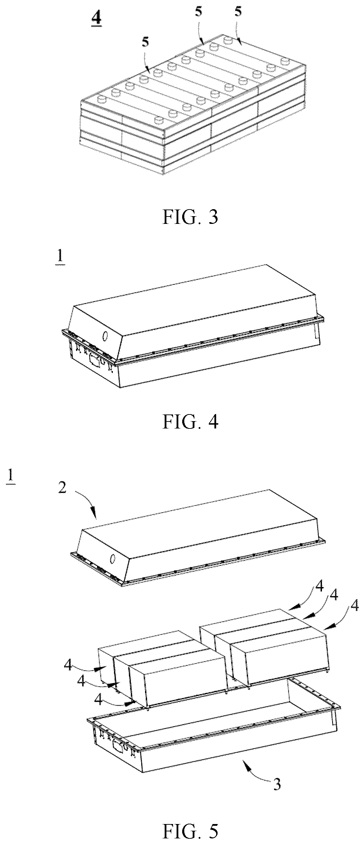

FIG. 3 shows a battery module 4 as an example. Referring to FIG. 3, in the battery module 4, a plurality of secondary batteries 5 may be arranged sequentially along a length direction of the battery module 4. Alternatively, the secondary batteries may be arranged in any other manner. Further, the plurality of secondary batteries 5 may be fixed by a fastener.

Optionally, the battery module 4 may further include a shell that provides an accommodation space. The plurality of secondary batteries 5 are accommodated in the accommodation space.

In some embodiments, the battery module may be assembled to form a battery pack. The battery pack may include one or more battery modules, and the specific number of battery modules in a battery pack may be selected by a person skilled in the art depending on practical applications and capacity of the battery pack.

FIG. 4 and FIG. 5 show a battery pack 1 as an example. Referring to FIG. 4 and FIG. 5, the battery pack 1 may include a battery box and a plurality of battery modules 4 disposed in the battery box. The battery box includes an upper box 2 and a lower box 3. The upper box 2 fits the lower box 3 to form a closed space for accommodating the battery modules 4. The plurality of battery modules 4 may be arranged in the battery box in any manner.

Further, this application provides an electrical device. The electrical device includes at least one of the secondary battery, the battery module, or the battery pack according to this application. The secondary battery, the battery module, or the battery pack may be used as a power supply of the electrical device, or used as an energy storage unit of the electrical device. The electrical device may include, but without being limited to, a mobile device (such as a mobile phone or a laptop computer), an electric vehicle (such as a battery electric vehicle, a hybrid electric vehicle, a plug-in hybrid electric vehicle, an electric bicycle, an electric scooter, an electric golf cart, or an electric truck), an electric train, a ship, a satellite system, or an energy storage system.

The secondary battery, the battery module, or the battery pack may be selected for use in the electrical device according to practical requirements of the electrical device.

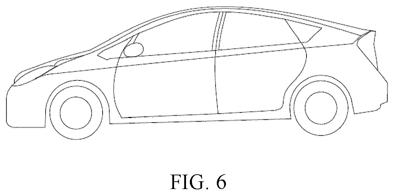

FIG. 6 shows an electrical device as an example. The electrical device may be a battery electric vehicle, a hybrid electric vehicle, a plug-in hybrid electric vehicle, or the like. The electrical device may adopt a battery pack or a battery module in order to meet the requirements of the electrical device on a high power and a high energy density of the secondary battery.

In another example, the device may be a mobile phone, a tablet computer, a notebook computer, or the like. The device is generally required to be thin and light, and may have a secondary battery as a power supply.

### Embodiments

The following describes some embodiments of this application. The embodiments described below are illustrative, and are merely intended to construe this application but not to limit this application. Unless techniques or conditions are expressly specified in an embodiment hereof, the techniques or conditions described in the literature in this field or in an instruction manual of the product are applicable in the embodiment. A reagent or instrument used herein without specifying a manufacturer is a conventional product that is commercially available in the market. In the following embodiments, an example is given in which the secondary battery is a sodium-ion battery, but this application is not limited to the example.

### I. Preparation methods

### Embodiment 1

### (1) Preparing a positive electrode plate

Dissolving a 10 wt% polyvinylidene fluoride binder thoroughly in an N-methylpyrrolidone solvent, in which the total mass of the polyvinylidene fluoride binder, the carbon black conductive agent, and the positive active material Na₄Fe₃(PO₄)₂P₂O₇ is denoted as 100 wt%. Adding a 10 wt% carbon black conductive agent and an 80 wt% positive active material Na₄Fe₃(PO₄)₂P₂O₇ to form a well dispersed slurry. Applying the slurry onto the surface of aluminum foil evenly, and then moving the aluminum foil into a vacuum oven in which the foil is dried thoroughly. Calendering the resultant electrode plate, and then die-cutting the electrode plate to obtain a positive electrode plate.

### (2) Preparing a negative electrode plate

Adding a 4 wt% carbon nanotube material and a 1.6 wt% polymer binder sodium carboxymethyl cellulose into water, in which the total mass of the negative electrode material is denoted as 100 wt%. Stirring the mixture well to form a uniform slurry. Applying the slurry onto the surface of copper foil, and then moving the copper foil into a vacuum oven in which the foil is dried thoroughly. Die-cutting the electrode plate to obtain a negative electrode plate.

### (3) Preparing an electrolyte solution

Dissolving a sodium salt sodium hexafluorophosphate (NaPF₆) and 1,3-propane sultone (1,3-PS) in an organic solvent ethylene glycol dimethyl ether (DME) in an argon atmosphere glovebox (H₂O < 0.1 ppm, O₂ < 0.1 ppm), and stirring well to obtain an electrolyte solution in which the sodium salt concentration is 1 mol/L, that is, the electrolyte solution in Embodiment 1.

### (4) Separator

Using a polypropylene film as a separator.

### (5) Preparing a battery

Stacking the positive electrode plate, the separator, and the negative electrode plate sequentially in such a way that the separator is located between the positive electrode plate and the negative electrode plate to a serve a separation function. Injecting the electrolyte solution prepared above, and assembling the plates to form a stacked-type battery.

### Embodiments 2 to 37

Other steps of Embodiments 2 to 37 are identical to those in Embodiment 1 except that the formula of the electrolyte solution is different. The film resistance of the positive electrode plate is adjusted by adjusting the compaction density of the positive electrode plate.

### Comparative Embodiments 1 to 4

Other steps of Comparative Embodiments 1 to 4 are identical to those in Embodiment 1 except that the formula of the electrolyte solution is different. Detailed parameters are set out in Table 1.

### II. Testing the battery performance

### 1. Testing the film resistance

Using two conductive terminals of a Hioki BT23562 internal resistance tester to grip an upper side and a lower side of a positive electrode plate respectively, and applying a pressure to fix the electrode plate, in which a diameter of the conductive terminals is 14 mm, and the applied pressure is 15 MPa to 27 MPa, so that the resistance R of the positive electrode plate is measured.

### 2. Coulombic efficiency

Using Embodiment 1 as an example, a method for testing the Coulombic efficiency includes: charging a prepared sodium secondary battery at 25 °C at a constant current of 1/3 C until the voltage reaches 3.7 V, and then charging the battery at a constant voltage of 3.7 V until the current drops to 0.05 C, so as to obtain an initial charge capacity (Cc₁); discharging the battery at a constant current of 1/3 C until the voltage reaches 2.5 V, so as to obtain an initial discharge capacity (Cd₁), and then calculating the Coulombic efficiency of the sodium battery as:
Coulombic efficiency of the sodium battery = initial discharge capacity (Cd1)/initial charge capacity (Cc1) × 100%.

The test process for the comparative embodiment and other embodiments is the same as above.

### 3. High-temperature cycle capacity retention rate

Using Embodiment 1 as an example, a method for testing the high-temperature cycle capacity retention rate includes: charging a sodium battery at 45 °C at a constant current of 1 C until the voltage reaches 3.7 V, and then charging the battery at a constant voltage of 3.7 V until the current drops to 0.05 C; discharging the battery at a constant current of 1 C until the voltage reaches 2.5 V, so as to obtain a first-cycle discharge capacity (Cd₁); repeating the above charge-and-discharge cycle until the n^{th} cycle to obtain the n^{th}-cycle discharge capacity of the battery, denoted as Cdₙ; and then calculating the capacity retention rate of the sodium battery as:
Capacity retention rate = nth-cycle discharge capacity (Cdn)/first-cycle discharge capacity (Cd1) × 100%.

The high-temperature cycle capacity retention rate in this application is a capacity retention rate of the battery cycled for 100 cycles at a high temperature.

The test process for the comparative embodiment and other embodiments is the same as above.

### 4. High-temperature cycle DCR

The direct-current internal resistance (DCR) means a resistance incurred by the current inside a battery cell. The voltage of the battery rebounds due to polarization after completion of the discharge process. The direct-current resistance of the battery is calculated by determining a voltage difference between a voltage at an instant just before the end of discharge and a voltage stabilized after the end of the discharge in an intermittent discharge process of the battery.

Using Embodiment 1 as an example, a method for testing the high-temperature cycle DCR includes: charging a sodium-ion battery at 25 °C at a constant current of 1 C until the voltage reaches 3.7 V, and then charging the battery at a constant voltage of 3.7 V until the current drops to 0.05 C; discharging the battery at a constant current of 1 C until the voltage reaches 2.5 V, and then leaving the battery to stand for 5 minutes (stabilization time); continuing to perform a next cycle by repeating the above charging and discharging operations; recording, in each cycle, the voltage of the battery before the end of the discharge and the voltage of the battery stabilized, and then calculating the direct-current resistance as: R = ΔU/I (where ΔU is the voltage difference, R is the direct-current resistance, and I is the discharge current).

The high-temperature cycle DCR tested in this application is a direct-current resistance of the battery cycled for 100 cycles at a high temperature.

The test process for the comparative embodiment and other embodiments is the same as above.

### 5. Sodium dendrites

Disassembling the sodium battery in an argon atmosphere glovebox (H₂O < 0.1 ppm, O₂ < 0.1 ppm) after the battery has been cycled for 100 cycles, and visually observing the surface morphology of the negative electrode plate to determine whether any sodium dendrites are generated.

If the negative electrode plate is free from white spots, it is determined that "no" sodium dendrites occur.

If the negative electrode plate contains sporadic white spots, it is determined that sodium dendrites are "slight".

If the negative electrode plate contains dense white spots, it is determined that sodium dendrites are "severe".

The test process for the comparative embodiment and other embodiments is the same as above.

### 6. High-temperature storage capacity retention rate

Using Embodiment 1 as an example, a method for testing the high-temperature storage capacity retention rate includes: charging a sodium battery at 25 °C at a constant current of 1 C until the voltage reaches 3.7 V, and then charging the battery at a constant voltage of 3.7 V until the current drops to 0.05 C; discharging the battery at a constant current of 1 C until the voltage reaches 2.5 V, so as to obtain a pre-storage discharge capacity (Cdₐ); charging the sodium battery at 25 °C at a constant current of 1 C until the voltage reaches 3.7 V, and then charging the battery at a constant voltage of 3.7 V until the current drops to 0.05 C, whereby the battery is recharged to 100% SOC; storing the battery in a 45 °C constant-temperature environment for 60 days; removing the battery from the 45 °C constant-temperature environment after the 60 days of storage, and cooling the battery down to a room temperature; charging the battery at 25 °C at a constant current of 1 C until the voltage reaches 3.7 V, and then charging the battery at a constant voltage of 3.7 V until the current drops to 0.05 C; discharging the battery at a constant current of 1 C until the voltage reaches 2.5 V, so as to obtain a discharge capacity of the sodium battery after 60 days of storage, denoted as Cd_{b}; and then calculating the capacity retention rate of the sodium battery as:
Capacity retention rate = (discharge capacity of the battery after 60 days of storage (Cdb)/pre-storage discharge capacity (Cda) × 100%.

The test process for the comparative embodiment and other embodiments is the same as above.

### 7. High-temperature storage DCR

Using Embodiment 1 as an example, a method for testing the high-temperature storage DCR includes: charging, after the sodium battery is stored at 45 °C for 60 days, the sodium battery at 25 °C at a constant current of 1 C until the voltage reaches 3.7 V, and then charging the battery at a constant voltage of 3.7 V until the current drops to 0.05 C; discharging the battery at a constant current of 1 C until the voltage reaches 2.5 V, and then leaving the battery to stand for 5 minutes (stabilization time); recording the voltage of the battery before the end of the discharge and the voltage of the battery stabilized, and then calculating the direct-current resistance as: R = ΔU/I (where ΔU is the voltage difference, R is the direct-current resistance, and I is the discharge current).

The test process for the comparative embodiment and other embodiments is the same as above.

### III. Test results

The test results of the embodiments and comparative embodiments are shown in Table 1.

**Table 1**

| Serial number | Electrolyte solution | | | | | Positive electrode | Battery performance | | | | | | |
|---|---|---|---|---|---|---|---|---|---|---|---|---|---|
| | Sodium salt | Sodium salt concentration (mol/L) | Solvent | additive | Content of additive y (w%) | Film resistance X (Ω) | x×y | Coulombic efficiency (%) | Capacity retention rate after cycling at | High-temperature cycle DCR | Sodium dendrites | Capacity retention rate after 60 days of | High-temperature storage |
| Embodiment | NaPF₆ | 1 | DME | 1,3-PS | 1 | 3 | 3 | 95.2 | 93.3 | 655 | None | 94.6 | 823 |
| Embodiment | NaPF₆ | 1 | DME | 1,3-PS | 0.2 | 3 | 0.6 | 90.2 | 88.1 | 766 | None | 89 | 935 |
| Embodiment | NaPF₆ | 1 | DME | 1,3-PS | 0.5 | 3 | 1.5 | 92.7 | 90.9 | 719 | None | 91.9 | 888 |
| Embodiment | NaPF₆ | 1 | DME | 1,3-PS | 2 | 3 | 6 | 92.2 | 90.4 | 727 | None | 91.6 | 896 |
| Embodiment | NaPF₆ | 1 | DME | 1,3-PS | 5 | 3 | 15 | 90 | 87.8 | 779 | None | 88.5 | 946 |
| Embodiment | NaPF₆ | 1 | DME | 1,3-PS | 1 | 5 | 5 | 92.6 | 90.6 | 725 | None | 91.6 | 892 |
| Embodiment | NaPF₆ | 1 | DME | 1,3-PS | 1 | 10 | 10 | 91.7 | 89.6 | 740 | None | 91.2 | 911 |
| Embodiment | NaPF₆ | 1 | DME | 1,3-PS | 1 | 25 | 25 | 89.6 | 87.7 | 780 | None | 88.4 | 948 |
| Embodiment | NaPF₆ | 1 | DME | 1,3-PS | 0.5 | 50 | 25 | 89.1 | 87.5 | 785 | None | 88.1 | 952 |
| Embodiment | NaPF₆ | 1 | DME | 1,3-PS | 1.5 | 10 | 15 | 91.3 | 89.1 | 750 | None | 91.7 | 922 |
| Embodiment | NaPF₆ | 1 | DME | 1,3-PS | 3 | 5 | 15 | 90 | 87.4 | 788 | None | 88.5 | 955 |
| Embodiment | NaPF₆ | 1 | DME | 1,3-PS | 5 | 5 | 25 | 89.5 | 87.1 | 792 | None | 88.4 | 961 |
| Embodiment | NaPF₆ | 1 | DME | FPS | 1 | 3 | 3 | 93.2 | 91.4 | 707 | None | 92.5 | 875 |
| Embodiment | NaPF₆ | 1 | DME | 2,4-BS | 1 | 3 | 3 | 92.5 | 90.6 | 722 | None | 91.6 | 891 |
| Embodiment | NaPF₆ | 1 | DME | PES | 1 | 3 | 3 | 94.6 | 92.5 | 670 | None | 93.7 | 840 |
| Embodiment | NaPF₆ | 1 | DME | MMDS | 1 | 3 | 3 | 92.8 | 91 | 716 | None | 92.2 | 886 |
| Embodiment | NaPF₆ | 1 | DME | PPS | 1 | 3 | 3 | 92.1 | 90.2 | 732 | None | 91.3 | 900 |
| Embodiment | NaPF₆ | 1 | DME | DTD | 1 | 3 | 3 | 94.8 | 92.9 | 660 | None | 94 | 831 |
| Embodiment | NaPF₆ | 1 | DME | MeDTD | 1 | 3 | 3 | 93 | 91.1 | 714 | None | 92.3 | 883 |
| Embodiment | NaPF₆ | 1 | DME | FDTD | 1 | 3 | 3 | 93.3 | 91.6 | 702 | None | 92.8 | 871 |
| Embodiment | NaPF₆ | 1 | DME | VDTD | 1 | 3 | 3 | 92.3 | 90.1 | 734 | None | 91.2 | 902 |
| Embodiment | NaPF₆ | 1 | DME | CDTD | 1 | 3 | 3 | 92.9 | 91.2 | 711 | None | 92.5 | 879 |
| Embodiment | NaPF₆ | 1 | DME | ES | 1 | 3 | 3 | 91.7 | 89.6 | 745 | None | 90.6 | 910 |
| Embodiment | NaPF₆ | 1 | DEE | 1,3-PS | 1 | 3 | 3 | 92.5 | 90.7 | 722 | None | 91.8 | 890 |
| Embodiment | NaPF₆ | 1 | DEGDME | 1,3-PS | 1 | 3 | 3 | 94.9 | 92.7 | 683 | None | 94 | 849 |
| Embodiment | NaPF₆ | 1 | DOL | 1,3-PS | 1 | 3 | 3 | 91.8 | 89.8 | 740 | None | 90.9 | 906 |
| Embodiment | NaPF₆ | 1 | THF | 1,3-PS | 1 | 3 | 3 | 91.3 | 89.4 | 749 | None | 90.6 | 913 |
| Embodiment | NaPF₆ | 1 | VC | 1,3-PS | 1 | 3 | 3 | 90.6 | 88.6 | 755 | None | 89.2 | 926 |
| Embodiment | NaPF₆ | 0.5 | DME | 1,3-PS | 1 | 3 | 3 | 90.8 | 88.9 | 750 | None | 89.6 | 920 |
| Embodiment | NaPF₆ | 0.8 | DME | 1,3-PS | 1 | 3 | 3 | 92.7 | 91 | 716 | None | 91.9 | 886 |
| Embodiment | NaPF₆ | 2 | DME | 1,3-PS | 1 | 3 | 3 | 93.1 | 91.2 | 711 | None | 92.3 | 882 |
| Embodiment | NaPF₆ | 4 | DME | 1,3-PS | 1 | 3 | 3 | 90.8 | 88.3 | 761 | None | 89.4 | 932 |
| Embodiment | NaDFOB | 1 | DME | 1,3-PS | 1 | 3 | 3 | 93.4 | 91.7 | 702 | None | 92.7 | 869 |
| Embodiment | NaBF₄ | 1 | DME | 1,3-PS | 1 | 3 | 3 | 92.6 | 90.8 | 720 | None | 91.7 | 889 |
| Embodiment | NaFSI | 1 | DME | 1,3-PS | 1 | 3 | 3 | 93 | 91.2 | 710 | None | 92.5 | 877 |
| Embodiment | NaOTf | 1 | DME | 1,3-PS | 1 | 3 | 3 | 94.4 | 92.3 | 675 | None | 93.4 | 844 |
| Embodiment | NaTFSI | 1 | DME | 1,3-PS | 1 | 3 | 3 | 92.3 | 90.5 | 726 | None | 91.7 | 895 |
| Comparative Embodiment | NaPF₆ | 1 | DME | 1,3-PS | 2 | 20 | 40 | 85.5 | 83.1 | 866 | Slight | 84.3 | 1045 |
| Comparative Embodiment | NaPF₆ | 1 | DME | 1,3-PS | 5 | 8 | 40 | 86.9 | 84.6 | 852 | Slight | 85.1 | 1030 |
| Comparative Embodiment | NaPF₆ | 1 | DME | / | / | 3 | / | 80.8 | 78.7 | 1032 | Severe | 77.6 | 1319 |
| Comparative Embodiment | NaPF₆ | 1 | VC | / | / | 3 | / | 77.9 | 76.1 | 1156 | Severe | 75.3 | 1467 |

As can be seen from Table 1, the film resistance x Ω of the positive electrode and the mass percent y% of the film-forming additive based on the total mass of the electrolyte solution of the anode-free sodium batteries in Embodiments 1 to 37 satisfy: x × y ≤ 25. In contrast to Comparative Embodiments 1 to 4, the sodium batteries in Embodiments 1 to 37 are superior in that: the Coulombic efficiency, the high-temperature cycle capacity retention rate, and the high-temperature storage capacity retention rate are relatively high; the high-temperature cycle direct-current resistance (DCR) and the high-temperature storage DCR are relatively low; and the electrode plate is free from sodium dendrites.

As can be seen from Embodiments 1 to 5, when the mass percent of the film-forming additive in the electrolyte solution is 0.2% to 5% based on the total mass of the electrolyte solution, the battery is excellent in Coulombic efficiency, high-temperature performance, and capabilities of suppressing sodium dendrites. When the mass percent of the film-forming additive in the electrolyte solution is 0.5% to 2% based on the total mass of the electrolyte solution, the Coulombic efficiency of the battery is further improved, the high-temperature cycle capacity retention rate and the high-temperature storage capacity retention rate are further improved, and the high-temperature cycle resistance is further reduced.

As can be seen from Embodiments 1 to 37, when the film resistance of the positive electrode plate is not greater than 50 Ω, the battery is excellent in Coulombic efficiency, high-temperature performance, and capabilities of suppressing sodium dendrites. As can be seen from Embodiments 1, 6 and 7 versus Embodiment 8, when the film resistance of the positive electrode plate is not greater than 10 Ω, the Coulombic efficiency, the high-temperature cycle capacity retention rate, and the high-temperature storage capacity retention rate of the battery are further improved, and the high-temperature cycle internal resistance and the high-temperature storage internal resistance are further reduced.

It is worth noting that in Comparative Embodiments 1 and 2, although the mass percent y% of the film-forming additive and the film resistance x Ω of the positive electrode of the anode-free sodium battery fall within the above range, the relational expression x × y ≤ 25 is not satisfied. Consequently, although the performance of the battery is improved to some extent in contrast to Comparative Embodiments 3 and 4, the Coulombic efficiency of the battery fails to increase to at least 90% to meet the requirements in practical applications.

As can be seen from Embodiments 1 to 37, the film-forming additive includes one or more of a sulfate ester compound, a sulfonate ester compound, or a sulfite ester compound. As can be seen from Embodiments 1 to 37 versus Comparative Embodiments 3 to 4, the film-forming additive significantly improves the Coulombic efficiency, high-temperature performance, and capabilities of suppressing sodium dendrites.

As can be seen from Embodiments 1, 13 to 22 versus Embodiment 23, the sulfate ester compound and the sulfonate ester compound are more effective than the sulfite ester compound in improving the Coulombic efficiency and high-temperature performance of the battery. The 3-fluoro-1,3-propane sultone (FPS), the 4-methyl-ethylene sulfate (MeDTD), and the 4-fluoroethylene sulfate (FDTD) can further increase the Coulombic efficiency of the anode-free battery to at least 93%, and increase the high-temperature cycle capacity retention rate to at least 91%. The 1,3-propene sultone (PES) and the ethylene sulfate (DTD) can increase the Coulombic efficiency of the anode-free battery to at least 94%, and increase the high-temperature cycle capacity retention rate to at least 92%. The 1,3-propane sultone (1,3-PS) can even increase the Coulombic efficiency of the anode-free battery to at least 95%, and increase the high-temperature cycle capacity retention rate to at least 93%.

As can be seen from Embodiments 24 to 27 versus Embodiment 28, the ether solvent is more suitable for the anode-free sodium battery than the ester solvent, and is conducive to improving the Coulombic efficiency and electrochemical performance of the anode-free sodium battery. In the ether solvents, the ethylene glycol dimethyl ether (DME) and the diglyme (DEGDME) are more suitable for the anode-free sodium battery, and further enhance the Coulombic efficiency and high-temperature cycle capacity retention rate of the anode-free sodium battery significantly.

As can be seen from Embodiment 1 and Embodiments 29 to 32, when the molar concentration of the sodium salt as an electrolyte salt is 0.5 mol/L to 4 mol/L, it is ensured that the anode-free sodium battery is excellent in Coulombic efficiency and high-temperature performance and in suppressing growth of sodium dendrites. As can be seen from Embodiments 1, 30, and 31 versus Embodiments 29 and 32, when the molar concentration of the sodium salt as an electrolyte salt is 0.8 mol/L to 2 mol/L, the Coulombic efficiency of the anode-free sodium battery is increased to at least 91%, and the high-temperature cycle capacity retention rate is increased to at least 90%, thereby demonstrating more excellent electrochemical performance.

As can be seen from Embodiments 33 to 37, all the sodium salts such as sodium hexafluorophosphate (NaPF₆), sodium difluoro(oxalato)borate (NaDFOB), sodium tetrafluoroborate (NaBF₄), sodium bis(fluorosulfonyl)imide, sodium trifluoromethanesulfonate (NaOTf), and sodium bis(trifluoromethanesulfonyl)imide (NaTFSI) are applicable to the technical solutions hereof. All the anode-free batteries that use such a sodium salt as an electrolyte salt are excellent in the Coulombic efficiency, the high-temperature cycle performance, and the high-temperature storage performance.

It is hereby noted that this application is not limited to the foregoing embodiments. The foregoing embodiments are merely examples. Any and all embodiments with substantively the same constituents or exerting the same effects as the technical ideas hereof without departing from the scope of the technical solutions of this application still fall within the technical scope of this application. In addition, all kinds of variations of the embodiments conceivable by a person skilled in the art and any other embodiments derived by combining some constituents of the embodiments hereof without departing from the subject-matter of this application still fall within the scope of this application.

## Claims

1. A secondary battery, **characterized in that** the secondary battery comprises a positive electrode plate and an electrolyte solution, and the electrolyte solution contains a film-forming additive; and
a film resistance x Ω of the positive electrode plate and a mass percent y% of the film-forming additive based on a total mass of the electrolyte solution satisfy: x × y ≤ 25.

2. The secondary battery according to claim 1, **characterized in that**, based on the total mass of the electrolyte solution, the mass percent of the film-forming additive in the electrolyte solution is 0.2% to 5%, and optionally 0.5% to 2%.

3. The secondary battery according to claim 1 or 2, **characterized in that** the film resistance of the positive electrode plate is not greater than 50 Ω, and optionally not greater than 10 Ω.

4. The secondary battery according to any one of claims 1 to 3, **characterized in that** the film-forming additive comprises one or more of a sulfate ester compound, a sulfonate ester compound, or a sulfite ester compound.

5. The secondary battery according to claim 4, **characterized in that** the sulfate ester compound comprises one or more of compounds represented by Formula I: 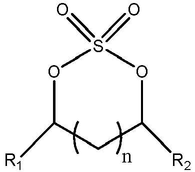 wherein, n is any integer ranging from 0 to 3, and R₁ and R₂ each are independently selected from hydrogen, fluorine, cyano, olefinyl, substituted or unsubstituted C₁ to C₆ alkyl, or

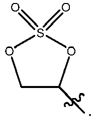

6. The secondary battery according to claim 4 or 5, **characterized in that** the sulfate ester compound comprises one or more of ethylene sulfate, 4-methyl-ethylene sulfate, 4-fluoroethylene sulfate, 4-n-propylethylene sulfate, 4,4'-bis(ethylene sulfate), 4-vinyl- ethylene sulfate, 4-ethyl ethylene sulfate, 4,5-difluoroethylene sulfate, or 4-cyanoethylene sulfate.

7. The secondary battery according to any one of claims 4 to 6, **characterized in that** the sulfonate ester compound comprises one or more of a salt with a sulfonate anion or a compound represented by Formula II or Formula III: 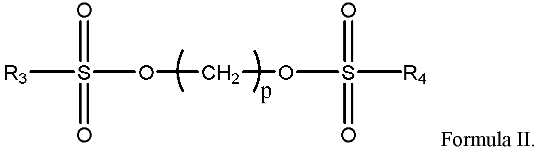
wherein, p is any integer ranging from 0 to 5, and R₃ and R₄ each are independently selected from substituted or unsubstituted C₁ to C₆ alkyl, 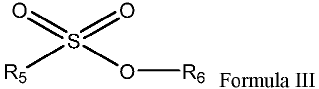
wherein, R₅ and R₆ as well as sulfur and oxygen linked thereto jointly form a 4-**,** 5- or 6-membered ring, the ring optionally contains a double bond and optionally contains one or two sulfonate groups, and hydrogen on the ring is optionally substituted by halogen or C₁ to C₃ alkyl.

8. The secondary battery according to any one of claims 4 to 7, **characterized in that** the sulfonate ester compound comprises one or more of 1,3-propane sultone, 3-fluoro-1,3-propane sultone, 1-methyl-1,3-propane sultone, 1,4-butane sultone, 1,4-butene sultone, 1,3-propene sultone, methylene methane disulfonate, pyridinium propane sulfonate, or 1,4-butanediol dimethyl sulfonate.

9. The secondary battery according to any one of claims 4 to 8, **characterized in that** the sulfite ester compound comprises one or more of compounds represented by Formula IV: 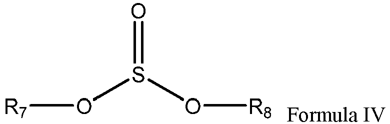 wherein, R₇ and R₈ each are independently selected from substituted or unsubstituted C₁ to C₆ alkyl; or, R₇ and R₈, oxygen linked thereto, and sulfur linked to the oxygen jointly form a 5- or 6-membered ring; the ring optionally contains a double bond; and hydrogen on the ring is optionally substituted by halogen or C₁ to C₃ alkyl.

10. The secondary battery according to any one of claims 4 to 9, **characterized in that** the sulfite ester comprises one or more of 1,3-propylene sulfite, ethylene sulfite, butylene sulfite, dimethyl sulfite, or diethyl sulfite.

11. The secondary battery according to any one of claims 1 to 10, **characterized in that** the electrolyte solution further comprises a sodium salt and an ether solvent, and a molar concentration of the sodium salt is 0.5 mol/L to 4 mol/L, and optionally 0.8 mol/L to 2 mol/L.

12. The secondary battery according to claim 11**, characterized in that** the sodium salt comprises one or more of sodium hexafluorophosphate, sodium difluoro(oxalato)borate, sodium tetrafluoroborate, sodium bis(oxalato)borate, sodium perchlorate, sodium hexafluoroarsenate, sodium bis(fluorosulfonyl)imide, sodium trifluoromethanesulfonate, or sodium bis(trifluoromethanesulfonyl)imide.

13. The secondary battery according to claim 11 or 12, **characterized in that** the ether solvent is one or more of ethylene glycol dimethyl ether, ethylene glycol diethyl ether, diglyme, triglyme, tetraglyme, 1,3-dioxolane, tetrahydrofuran, methyltetrahydrofuran, diphenyl ether, crown ether, or fluoroether.

14. The secondary battery according to any one of claims 1 to 13, **characterized in that** the positive electrode plate comprises a positive active material, and the positive active material comprises one or more of a layered transition metal oxide, a polyanionic compound, or a Prussian blue analogue.

15. The secondary battery according to any one of claims 1 to 14, **characterized in that** the secondary battery is one of a lithium-ion battery or a sodium-ion battery.

16. The secondary battery according to any one of claims 1 or 15, **characterized in that** the secondary battery is an anode-free sodium metal battery.

17. A battery module, **characterized in that** the battery module comprises the secondary battery according to any one of claims 1 to 16.

18. A battery pack, **characterized in that** the battery pack comprises the secondary battery according to any one of claims 1 to 16 or the battery module according to claim 17.

19. An electrical device, **characterized in that** the electrical device comprises at least one of the secondary battery according to any one of claims 1 to 16, the battery module according to claim 17, or the battery pack according to claim 18.
